# EUROPÄISCHE PATENTSCHRIFT

(11) **EP 1 222 542 B1**
(45) Veröffentlichungstag und Bekanntmachung des Hinweises auf die Patenterteilung: **16.04.2003**
(21) Anmeldenummer: 00945429.9
(22) Anmeldetag: 26.06.2000
(51) Int. Cl.: G06F 11/00

(54) **FEHLERTOLERANTES VERTEILTES COMPUTERSYSTEM**
FAULT-TOLERANT DISTRIBUTED COMPUTER SYSTEM
SYSTEME D'ORDINATEURS REPARTI INSENSIBLE AUX DEFAILLANCES

(30) Priorität: 13.08.1999 AT 139599
(43) Veröffentlichungstag der Anmeldung: 17.07.2002
(73) Patentinhaber: FTS Computertechnik Ges.mbH, 2500 Baden-Siegenfeld (AT)
(72) Erfinder: KOPETZ, Hermann, A-2500 Baden-Siegenfeld (AT); KOPETZ, Georg, A-2500 Baden-Siegenfeld (AT)
(74) Vertreter: Matschnig, Franz, Dipl.-Ing.
(86) Internationale Anmeldenummer: AT0000174
(87) Internationale Veröffentlichungsnummer: WO01013230

(56) Entgegenhaltungen:
- US-A- 4 484 275
- TEMPLE C: "AVOIDING THE BABBLING-IDIOT FAILURE IN A TIME-TRIGGERED COMMUNICATION SYSTEM" ANNUAL INTERNATIONAL SYMPOSIUM ON FAULT-TOLERANT COMPUTING,US,LOS ALAMITOS, CA: IEEE COMPUTER SOC, 23. Juni 1998 (1998-06-23), Seiten 218-227, XP000804717 ISBN: 0-8186-8471-2

## Beschreibung

Diese Erfindung betrifft ein fehlertolerantes verteiltes Computersystem, in dem eine Vielzahl von Knotenrechnern über zumindest eine Verteilereinheit verbunden sind, jeder Knotenrechner über eine autonome Kommunikationskontrolleinheit mit den entsprechenden Anschlüssen an die Kommunikationskanäle verfügt und der Zugriff auf die Kommunikationskanäle entsprechend einem zyklischen Zeitscheibenverfahren erfolgt.

Ebenso betrifft die Erfindung eine Verteilereinheit eines fehlertoleranten verteilten Computersystems, über welche eine Vielzahl von Knotenrechnern miteinander verbunden sind, jeder Knotenrechner über eine autonome Kommunikationskontrolleinheit mit zugehörigen Anschlüssen an die Kommunikationskanäle verfügt und der Zugriff auf die Kommunikationskanäle entsprechend einem zyklischen Zeitscheibenverfahren erfolgt.

Sicherheitskritische technische Anwendungen, d.s. insbesondere Anwendungen, bei welchen ein Fehler zu einer Katastrophe führen kann, werden zunehmend von verteilten fehlertoleranten Echtzeitcomputersystemen geführt.

In einem verteilten fehlertoleranten Echtzeitcomputersystem, bestehend aus einer Anzahl von Knotenrechnern und einem Echtzeitkommunikationssystem, muss der Ausfall eines Knotenrechners toleriert werden. Im Kern einer solchen Computerarchitektur befindet sich ein fehlertolerantes Echtzeitkommunikationssystem zum vorhersehbar schnellen und sicheren Austausch von Nachrichten.

Ein Kommunikationsprotokoll, das diese Anforderungen erfüllt, ist in der EP 0 658 257 A (WO 94/06080) beschrieben. Dieses Protokoll ist unter dem Namen "Time-Triggered Protokoll/C (TTP/C)" bekannt geworden. Es basiert auf dem bekannten zyklischen Zeitscheibenverfahren (TDMA-time-division multiple access) mit a priori festgelegten Zeitscheiben. Das Protokoll TTP/C verwendet ein Verfahren zur fehlertoleranten Uhrensynchronisation, das in der US 4,866,606 A geoffenbart ist.

Das Protokoll TTP/C setzt voraus, dass das Kommunikationssystem eine logische Broadcasttopologie unterstützt und dass die Knotenrechner aus der Sicht der Empfänger ein "fail-silence" (Kopetz, p. 121) Ausfallverhalten zeigen, d.h. entweder die Knotenrechner funktionieren korrekt im Wertebereich und im Zeitbereich oder sie sind ruhig. Dies ist beschrieben in Kopetz, H. (1997), "Real-Time Systems, Design Principles for Distributed Embedded Applications"; ISBN: 0-7923-9894-7, Boston, Kluwer Academic Publishers. Die Verhinderung von Fehlern im Zeitbereich, d. s. der sogenannten "Babbling Idiot" Fehler (Kopetz, p. 130 sowie Annual Int. Symposium on Fault-Tolerant Computing, 23. Juni 1998, Seiten 218-227, IEEE Computer Soc., Los Alamitos, CA, US; Temple C.: "Avoiding the Babbling-Idiot Failure in a Time-Triggered Communication System"), wird in dem Protokoll TTP/C durch eine unabhängige Fehlererkennungseinheit, den sogenannten "Guardian", erreicht, der über eine unabhängige Zeitbasis verfügt und das Zeitverhalten des Knotenrechners kontinuierlich überprüft. Um die Fehlertoleranz zu realisieren, werden mehrere fail-silent Knotenrechner zu einer fehlertoleranten Einheit (fault-tolerant unit-FTU) zusammengefasst und das Kommunikationssystem repliziert. Solange ein Knotenrechner einer FTU und ein Replikat des Kommunikationssystems funktionieren, werden die Dienste der FTU im Zeit- und Wertebereich rechtzeitig erbracht.

Eine logische Broadcasttopologie der Kommunikation kann physikalisch entweder durch ein verteiltes Bussystem, ein verteiltes Ringsystem, oder durch eine Verteilereinheit, z.B. einen Sternkoppler, mit Punkt-zu-Punkt Verbindungen zu den Knotenrechnern oder durch eine Kombination dieser Topologien aufgebaut werden. Wenn ein verteiltes Bussystem oder ein verteiltes Ringsystem aufgebaut wird, so muss jeder Knotenrechner über seinen eigenen Guardian verfügen.

Es ist eine Aufgabe der in Anspruch 1 definierte Erfindung die Fehlertoleranz eines verteilten zeitgesteuerten Computersystems zu erhöhen und die Kosten zu senken.

Diese Aufgabe wird mit einem Verfahren der eingangs genannten Art gelöst, bei welchem erfindungsgemäß die zumindest eine Verteilereinheit aufgrund des ihr a priori bekannt regulären Sendeverhaltens der Knotenrechner erzwingt, dass ein Knotenrechner nur innerhalb seiner statisch zugewiesenen Zeitscheibe eine Verbindung zu anderen Knotenrechnern erhält

Durch die Integration eines "Guardian" in die intelligente Verteilereinheit können "Babbling Idiot"-Fehler, d.h. Aussendung von Nachrichten zu falschen Zeitpunkten, der Knotenrechner verhindert werden.

Wird gemäß der Erfindung eine Verteilereinheit verwendet, so können alle Guardians in diese Verteilereinheit integriert werden, die aufgrund der globalen Beobachtung des Verhaltens aller Knotenrechner ein reguläres Sendeverhalten im Zeitbereich effektiv erzwingen kann.

Solche Verteilereinheiten mit integriertem Guardian bringen folgende Vorteile:
(i) Die Fault-Containment Region für global kritische Fehler wird um die Punkt-zu-Punkt Verbindungen der Knotenrechner zu der Verteilereinheit reduziert, d. h. Fehler, die z. B. durch EMI (electromagnetic immission) in diese Punkt-zu-Punkt Verbindungen eingestreut werden, können eindeutig einem Knotenrechner zugeordnet werden und haben keine globale Wirkung.
(ii) Die replizierten global kritischen Verteilereinheiten können räumlich getrennt in geschützten Bereichen installiert und physisch kompakt ausgeführt werden. Dadurch wird die Wahrscheinlichkeit, dass eine Fehlerursache alle global kritischen Verteilereinheiten zerstört, signifikant herabgesetzt.
(iii) Der Guardian der Verteilereinheit kann die dezentralen Guardians in den Knotenrechnern ersetzen. Dadurch wird bei den Knotenrechnern Hardware, z.B. die Guardian Oszillatoren eingespart.
(iv) Physikalische Punkt-zu-Punkt Verbindungen eignen sich gut für die Einführung von Glasfaser und bringen auch bei verdrillten Leitungen Vorteile in der Impedanzanpassung.

Ebenso wird die Aufgabe mit einer Verteilereinheit der oben erwähnten Art gelöst, bei welcher erfindungsgemäß die Verteilereinheit dazu eingerichtet ist, aufgrund des ihr a priori bekannten regulären Sendeverhaltens der Knotenrechner zu erzwingen, dass ein Knotenrechner nur innerhalb seiner statisch zugewiesenen Zeitscheibe eine Verbindung zu anderen Knotenrechnern erhält.

Die Funktion der Verteilereinheit basiert auf der Auswertung einer Kombination von statischen a priori Informationen über die zeitliche Sendeberechtigung der einzelnen Knotenrechner mit einer dynamischen Synchronisation der Verteilereinheit durch die Nachrichten eines zeitgesteuerten Kommunikationssystems.

Die Erfindung samt ihrer weiteren Vorteile wird im folgenden an Hand von Ausführungsbeispielen näher erläutert, die in der Zeichnung veranschaulicht wird. In dieser zeigen:
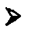 Fig. 1 die Struktur eines verteilten Computersystems mit vier Knotenrechnern, die über zwei replizierte Verteilereinheiten verbunden sind,
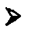 Fig. 2 die Struktur eines Knotenrechners, bestehend aus einer Kommunikations-Kontrolleinheit und einem Hostcomputer, die über ein Communication Network Interface (CNI) kommunizieren,
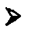 Fig. 3 die Struktur einer Verteilereinheit mit integriertem Guardian,
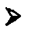 Fig. 4 die Datenstruktur der Information, welche die Verteilereinheit a priori enthält,
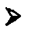 Fig. 5 die Struktur einer Initialisierungsnachricht, und
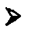 Fig. 6 die inneren Zustände der Verteilereinheit.

Im folgenden Abschnitt wird eine Realisierung der Erfindung an einem Beispiel mit vier Knotenrechnern, die über zwei replizierte Verteilereinheiten verbunden sind, gezeigt. Die Objekte in den Abbildungen sind so nummeriert, dass sich die erste der dreistelligen Bezugsziffern immer auf die Bildnummer bezieht.

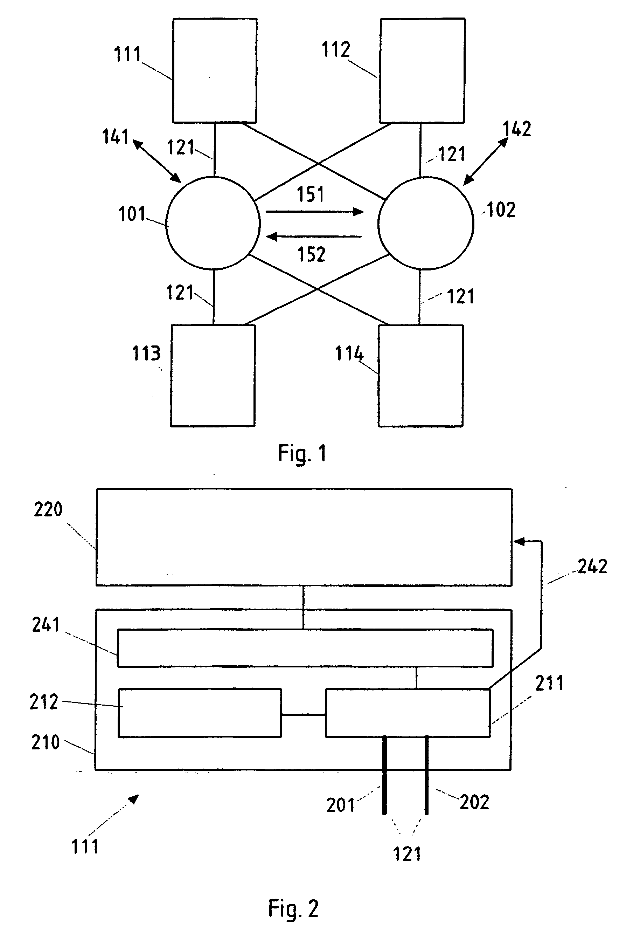

Fig. 1 zeigt ein System von vier Knotenrechnern **111, 112, 113** und **114,** wobei jeder Knotenrechner eine austauschbare Einheit bildet und über je eine Punkt-zu-Punkt Verbindung **121** mit zwei replizierten Verteilereinheiten **101** und **102** verbunden ist. Von der ersten Verteilereinheit **101** führt ein unidirektionaler Kommunikationskanal **151** zu der anderen zweiten Verteilereinheit **102.** Umgekehrt führt von der Verteilereinheit **102** ein unidirektionaler Kommunikationskanal **152** zu der Verteilereinheit **101.** Über diese unidirektionalen Kommunikationskanäle kann die erste Verteilereinheit **101** den Verkehr auf der zweiten Verteilereinheit **102** und umgekehrt beobachten und den Kaltstart oder die Uhrensynchronisation auch vornehmen, wenn es an den eigenen Verbindungen **121** keinen Nachrichtenverkehr gibt. Angedeutete Verbindungen **141** und **142** sind dedizierte Kommunikationskanäle; sie führen zu einem auf der Zeichnung nicht ersichtlichen Wartungscomputer, der die Parameter der Verteilereinheiten festlegen kann und die korrekte Funktion der Verteilereinheiten kontinuierlich überwacht.

Fig. 2 zeigt den inneren Aufbau eines Knotenrechners **111.** Er besteht aus zwei Subsystemen, nämlich einem Kommunikationskontroller **210,** der mit den replizierten Kommunikationskanälen **201** und **202** verbunden ist (entspricht **121** in Fig. 1), und einem Hostcomputer **220,** auf dem die Anwendungsprogramme des Knotenrechners ausgeführt werden. Diese beiden Subsysteme sind miteinander über ein Communication Network Interface (CNI) **241** und eine Signalleitung **242** verbunden. Das Interface 241 enthält einen Speicher (Dual Ported RAM = DPRAM), auf den beide Subsysteme zugreifen können. Die beiden Subsysteme tauschen über diesen gemeinsamen Speicher bzw. Interface **241** die Kommunikationsdaten aus. Die Signalleitung **242** dient zur Übertragung der synchronisierten Zeitsignale. Diese Signalleitung ist in der angeführten US 4,866,606 A genau beschrieben. Der Kommunikationskontroller **210,** der autonom arbeitet, verfügt über eine Kommunikationskontrolleinheit **211** und eine Datenstruktur **212,** die angibt, zu welchen Zeitpunkten Nachrichten gesendet und empfangen werden müssen. Die Datenstruktur **212** wird als Message Descriptor List (MEDL) bezeichnet.

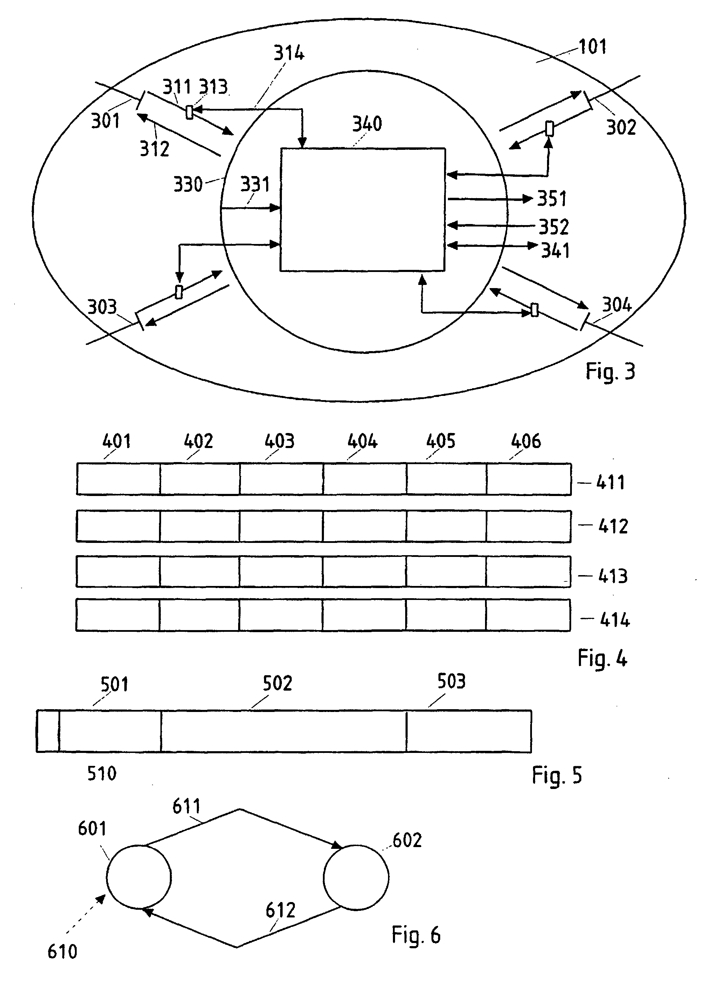

Fig. 3 zeigt die Struktur einer Verteilereinheit mit integriertem Guardian. Eine solche Verteilereinheit besteht aus Eingangsports **311,** Ausgangsports **312,** einem Datenverteiler **330** und einem Steuercomputer **340**. Die Datenverbindungen **301** von dem Knotenrechner (entspricht **121** in Fig. 1), werden zu einem Eingangsport **311** und einem Ausgangsport **312** der Verteilereinheit geführt. Das gleiche gilt für Datenverbindungen **302, 303** und **304.** Bei einer unidirektionalen Kommunikationsleitung können diese beiden Ports **311** und **312** auch getrennt mit entsprechenden Ports des Knotenrechners mit der Datenverbindung **301** verbunden werden. In jedem Eingangsport **311** befindet sich - neben den üblichen Filtern und, falls erforderlich, einer Potenzialtrennung - ein Schalter **313,** der vom Steuercomputer **340** der Verteilereinheit über eine Signalleitung **314** angesteuert werden kann und der dem Steuercomputer **340** mitteilt, wann auf diesem Port empfangen wird. Die Daten, die am Eingangsport **311** eintreffen, werden über den Datenverteiler **330** an die Ausgangsports **312,** an den Steuercomputer **340** (über die Datenleitung **331)** und an andere Verteilereinheiten (über den Kanal **351**) weitergeleitet. Der Steuercomputer **340** verfügt auch über einen seriellen I/O Kanal **341,** über den die statische Datenstruktur entsprechend Fig. 4 geladen werden kann und der periodisch Diagnosemeldung über den Zustand des Steuercomputers **340** an einen Wartungscomputer gibt. Falls erforderlich, können die Daten auf den Leitungen **312** vor dem Ausgang verstärkt werden. Solche, dem Stand der Technik entsprechenden Verstärker sind in der Fig. 3 nicht eingetragen.

Fig. 4 zeigt die Datenstruktur, die dem Steuercomputer **340** a priori, d.h. vor seiner Laufzeit, zur Verfügung gestellt wird. Diese Datenstruktur enthält für jeden Port bzw. Knotenrechner **111, 112, 113, 114** der Verteilereinheit einen eigenen Datensatz **411, 412, 413, 414.** In einem ersten Feld dieses Datensatzes **401** steht die Portnummer, auf die sich dieser Datensatz bezieht. In einem zweiten Feld **402** steht die Sendedauer des mit dem Port verbundenen Knotens entsprechend der Eintragung in der Liste MEDL **212.** In einem dritten Feld **403** steht die Dauer des Zeitintervalls zwischen dem Ende des aktuellen Sendens bis zum Beginn des nächsten Sendens des mit dem Port verbundenen Knotens. In einem vierten Feld **404** steht die Nummer des zeitlich nächsten Ports. In einem fünften Feld **405** steht die Dauer des Zeitintervalls zwischen dem Ende des aktuellen Sendens bis zum Beginn des Sendens des Knotens am zeitlich nächsten Port. Im Feld **406** steht die Länge einer Initialisierungsnachricht, die auf dem aktuellen Port empfangen werden kann. Der Inhalt der Datenstruktur von Fig. 4 wird von einem Entwicklungstool in Abstimmung mit den Message Descriptor Lists **212** erstellt und vor der Laufzeit über den Kanal **341** in den Steuercomputer **340** geladen.

Fig. 5 zeigt die Struktur einer Initialisierungsnachricht. Die Initialisierungsnachricht muss in ihrem Header **501** ein ausgezeichnetes Bit **510** enthalten, das die Nachricht als Initialisierungsnachricht kennzeichnet. Im Datenfeld **502** der Initialisierungsnachricht stehen weitere Informationen, die für die Funktion einer einfachen Verteilereinheit ohne Bedeutung sind. Am Ende der Initialisierungsnachricht befindet sich das CRC Feld **503.** Entsprechend leistungsfähige Verteilereinheiten können die Informationen im Datenfeld **502** einer Initialisierungsnachricht zusätzlich zur Erhöhung der Fehlererkennungswahrscheinlichkeit auswerten. Zum Beispiel können solche leistungsfähigere Verteilereinheiten das Zeitfeld einer TTP/C Initialisierungsnachricht auswerten, um den Uhrenstand des Senders mit der eigenen Uhr vergleichen zu können.

Fig. 6 zeigt die beiden wichtigsten inneren Zustände des Steuercomputers **340** einer Verteilereinheit **101,** unsynchronisiert **601** und synchronisiert **602.** Nach Power-up **610** geht der Steuercomputer **340** in den Zustand "unsynchronisiert". In diesem Zustand sind alle Eingangports **311** mit dem Datenverteiler **330** verbunden. Sobald auf einem Eingangsport über die Datenleitung **331** (oder über den Kanal **352)** vom Steuercomputer **340** eine korrekte Nachricht empfangen wird, stellt der Steuercomputer **340** über die Signalleitung **314** fest, über welchen Port empfangen wurde, speichert den Empfangszeitpunkt, überprüft die Länge der Nachricht durch Vergleich mit der im Feld **406** gespeicherten Länge und geht, bei positivem Ausgang der Prüfung, in den Zustand "synchronisiert" **602,** wobei der gespeicherte Empfangszeitpunkt der Initialisierungsnachricht das Synchronisationsereignis darstellt. Im Zustand "synchronisiert" **602** stellt der Steuercomputer **340** nur während der Zeitdauer **403** eine Verbindung am entsprechenden Eingangsport her. Wenn zum ungefähr richtigen Zeitpunkt eine beliebige Nachricht eintrifft, die den Codierungsvorschriften des gewählten Codierungssystems entspricht, dann verwendet der Steuercomputer die gemessene Zeitdifferenz zwischen dem beobachteten und erwarteten Ankunftszeitpunkt der Nachricht, um seine Uhr über einen bekannten fehlertoleranten Algorithmus (z.B. Kopetz 1997, p. 61) nachzusynchronisieren. Wenn während eines a priori festgelegten Zeitintervalls d_{fault-1} keine korrekte Nachricht an irgendeinem der Kanäle **301** bis **304** oder **352** eintrifft, wechselt die Verteilereinheit bzw. ihr Steuercomputer **340** in den Zustand "unsynchronisiert" **601.** Im synchronisierten Zustand **602** ist eine Nachricht korrekt, wenn sie mindestens die folgenden Kriterien erfüllt: Sie trifft am Eingangsport ungefähr zum erwarteten Zeitpunkt ein, verfügt über ein korrektes CRC Feld **503** und hat die richtige Länge entsprechend dem Feld **406**.

Der Steuercomputer **340** kommuniziert über die I/O Leitung **341** (dies sind die Leitungen **141** und **142** in Fig. 1) mit dem Wartungscomputer, der die Parametrisierung des Steuercomputers **340** vornimmt und die Funktion des Steuercomputers während des Betriebes überwacht.

Um zu verhindern, dass ein Einzelfehler im Taktgeber eines Knotenrechners, z.B. **111**, der zu einer marginal falschen Kodierung der physikalischen Signale auf beiden Kanälen **201** und **202** des Knotenrechners **111** führen kann, über beide Verteilereinheiten an die Empfänger der Nachricht durchschlägt, wird das eintreffende physikalische Signal in jeder Verteilereinheit unmittelbar nach dem Empfangen unter Verwendung des lokalen Taktgebers der Verteilereinheit in ein logisches Signal ("Digitalsignal") umgewandelt und unmittelbar vor dem Senden von der Verteilereinheit erneut in die physikalische Form umgewandelt (Signal Reshaping durch die Verteilereinheit). Damit wird ein marginal falsche Kodierung entweder in eine konsistent richtige Kodierung oder in eine konsistent falsche Kodierung abgebildet. Unter der Annahme, dass innerhalb einer TDMA Runde nur eine Fehlerursache auftritt, kann durch diese Maßnahme verhindert werden, dass ein Einzelfehler im Zeitbereich oder im Wertebereich die Kodierung auf beiden Kanälen derart stört, dass im System Inkonsistenzen auftreten können.

Es ist eine wichtige Eigenschaft dieser Erfindung, dass der Steuercomputer **340** nur das Öffnen und Schließen der Schalter 313 bewirken kann, jedoch die vermittelten Nachrichten inhaltlich weder verändert, noch neue Nachrichten einfügt. Die einzige Ausfallart der Verteilereinheit ist daher ein fail-silent Ausfall eines Kommunikationskanals. In einer fehlertoleranten Konfiguration ist aber stets ein zweiter unabhängiger Kommunikationskanal vorhanden.

Abschließend sei festgehalten, dass sich die Erfindung nicht auf die beschriebene Realisierung mit vier Knotenrechnern und zwei Verteilereinheiten beschränkt, sondern beliebig erweiterbar . ist. Sie ist nicht nur beim TTP/C Protokoll, sondern auch bei anderen zeitgesteuerten Protokollen anwendbar.

## Patentansprüche

1. Fehlertolerantes verteiltes Computersystem mit einer Vielzahl von Knotenrechnern (111 ... 114), die über zumindest eine Verteilereinheit (101, 102) verbunden sind, wobei jeder Knotenrechner über eine autonome Kommunikationskontrolleinheit (211) mit den entsprechenden Anschlüssen an die Kommunikationskanäle (201,202) verfügt und der Zugriff auf die Kommunikationskanäle entsprechend einem zyklischen Zeitscheibenverfahren erfolgt,
**dadurch gekennzeichnet, dass**
die zumindest eine Verteilereinheit (101, 102) einen Guardian (340 - 313) enthält, der aufgrund des ihm a priori bekannten regulären Sendeverhaltens der Knotenrechner (111 ... 114) erzwingt, dass ein Knotenrechner nur innerhalb seiner statisch zugewiesenen Zeitscheibe eine Verbindung zu anderen Knotenrechnem erhält.

2. Computersystem nach Anspruch 1, **dadurch gekennzeichnet, dass** der Guardian (340 - 131) der zumindest einen Verteilereinheit (101, 102) von dem Zustand "unsynchronisiert", in dem über alle Eingangsports (311) empfangen werden kann, nach dem Empfang einer korrekten Nachricht in den Zustand "synchronisiert" wechselt, in dem über einen Eingangsport nur während der diesem Eingangsport statisch zugewiesenen Zeitscheibe empfangen werden kann.

3. Computersystem nach Anspruch 1 oder 2, **dadurch gekennzeichnet, dass** der Guardian (340 - 131) der zumindest einen Verteilereinheit (101, 102) vom Zustand "synchronisiert" in den Zustand "unsynchronisiert" wechselt, wenn seit der letzten Initialisierungsnachricht an keinem ihrer Eingangports (311) innerhalb eines a priori vorgegebenen Zeitintervalls eine korrekte Nachricht empfangen wird.

4. Computersystem nach einem oder mehreren der Ansprüche 1 bis 3, **dadurch gekennzeichnet, dass** von einem Guardian (340 - 131) der zumindest einen Verteilereinbeit (101, 102) der Inhalt von eintreffenden Nachrichten im Sinne einer zusätzlichen Fehlererkennung ausgewertet wird.

5. Computersystem nach einem oder mehreren der Ansprüche 1 bis 4, **dadurch gekennzeichnet, dass** der Guardian (340 - 131) der zumindest einen Verteilereinheit nach "Power-up" den Zustand "unsynchronisiert" einnimmt.

6. Computersystem nach einem oder mehreren der Ansprüche 1 bis 5, **dadurch gekennzeichnet, dass** die zumindest eine Verteilereinheit (101, 102) die ankommenden physikalischen Signale unter Verwendung der lokalen Uhr der Verteilereinheit in eine logische digitale Form umwandelt und vor dem Senden wieder in die physikalische Form überführt.

7. Computersystem nach einem oder mehreren der Ansprüche 1 bis 6, **dadurch gekennzeichnet, dass** Verteilereinheiten (101, 102) über Kommunikationskanäle (201, 202) miteinander verbunden sind, um das Hochfahren und die Uhrensynchronisation einer Verteilereinheit zu ermöglichen, auch wenn auf den eigenen Verbindungen keine Nachrichten eintreffen.

8. Computersystem nach einem oder mehreren der Ansprüche 1 bis 7 **dadurch gekennzeichnet, dass** Verteilereinheiten (101, 102) über dedizierte Kommunikationskanäle (141, 142) mit mindestens einem Wartungscomputer verbunden sind, um die Parametrisierung der Verteilereinheiten vorzunehmen und die korrekte Funktion der Verteilereinheiten während des Betriebes zu überwachen.

## Claims

1. Fault-tolerant distributed computer system having a plurality of network-node computers (111... 114) which are connected by means of at least one distributor unit (101, 102), wherein each network-node computer has an autonomous communication control unit (211) with the corresponding connections to the communication channels (201, 202) and the communication channels are accessed according to a cyclical time slice process,
**characterised in that**
the at least one distributor unit (101, 102) contains a guardian (340-313) which, by reason of the regular transmission behaviour of the network-node computer (111...114) which the guardian knows *a priori*, causes a network-node computer to obtain a connection to other network-node computers only within its statically allocated time slice.

2. Computer system as claimed in claim 1, **characterised in that** after reception of a correct message, the guardian (340-131) of the at least one distributor unit (101, 102) changes from the "unsynchronised" state, in which reception is possible via all input ports (311), into the "synchronised" state in which reception is possible via an input port only during the time slice statically allocated to this input port.

3. Computer system as claimed in claim 1 or 2, **characterised in that** the guardian (340-131) of the at least one distributor unit (101, 102) changes from the "synchronised" state to the "unsynchronised" state when - since the last initialisation message - none of its input ports (311) receives a correct message within a time interval which is pre-set *a priori.*

4. Computer system as claimed in one or several of claims 1 to 3, **characterised in that** the content of incoming messages is evaluated by a guardian (340-131) of the at least one distributor unit (101, 102) in the sense of an additional error recognition.

5. Computer system as claimed in one or several of claims 1 to 4, **characterised in that** the guardian (340-131) of the at least one distributor unit assumes the "unsynchronised" state after "power-up".

6. Computer system as claimed in one or several of claims 1 to 5, **characterised in that** the at least one distributor unit (101, 102) converts the arriving physical signals into a logical digital form using the local clock of the distributor unit and returns them to the physical form before transmission.

7. Computer system as claimed in one or several of claims 1 to 6, **characterised in that** the distributor units (101, 102) are connected to each other via communication channels (201, 202) in order to permit start-up and clock synchronisation of a distributor unit even when no messages are incoming on their own connections.

8. Computer system as claimed in one or several of claims 1 to 7, **characterised in that** distributor units (101, 102) are connected to at least one maintenance computer via dedicated communication channels (141, 142) in order to carry out parametrisation of the distributor units and to monitor the correct operation of the distributor units during operation.

## Revendications

1. Système informatique réparti à tolérance de pannes, doté d'une multitude d'ordinateurs nodaux (111...114) reliés par au moins une unité de répartition (101, 102), chaque ordinateur nodal disposant d'une unité de contrôle de communication autonome (211) munie de canaux de communication de connexion correspondants (201, 202) et l'accès aux canaux de communication s'effectuant conformément à un procédé cyclique d'exécution à créneaux temporels, **caractérisé en ce qu'** au moins une unité de répartition (101, 102) comprend un pare-feu (340-313) qui impose aux ordinateurs nodaux (111...114), en se basant sur le comportement d'émission normal des ordinateurs nodaux connu a priori de lui, qu'un ordinateur nodal n'obtienne une connexion vers les autres ordinateurs nodaux que pendant son créneau temporel attribué statiquement.

2. Système informatique selon la revendication 1, **caractérisé en ce que** le pare-feu (340-131) d'une unité de répartition au moins (101, 102) après réception d'une information valide, passe d'un état "non synchronisé", dans lequel la réception est possible par tous les ports d'entrée (311), vers un état "synchronisé", dans lequel la réception est possible par un port d'entrée seulement pendant un créneau temporel attribué statiquement à ce port d'entrée.

3. Système informatique selon la revendication 1 ou 2, **caractérisé en ce que** le pare-feu (340-131) d'une unité de répartition au moins (101-102) passe de l'état "synchronisé" à l'état "non synchronisé" quand, depuis la dernière information d'initialisation, aucune information valide n'a été reçue par aucun de ses ports d'entrée (311) pendant un intervalle de temps attribué a priori.

4. Système informatique selon l'une quelconque ou plusieurs des revendications 1 à 3, **caractérisé en ce que** le contenu des informations entrantes est analysé par un pare-feu (340-131) d'une unité de répartition au moins en tant que reconnaissance d'erreurs supplémentaire.

5. Système informatique selon l'une quelconque ou plusieurs des revendications 1 à 4, **caractérisé en ce que** le pare-feu (340-131) d'une unité de répartition au moins adopte l'état "non synchronisé" après le "power up".

6. Système informatique selon l'une quelconque ou plusieurs des revendications 1 à 5, **caractérisé en ce qu'**une unité de répartition au moins (101, 102) transforme les signaux physiques entrants sous forme numérique logique en utilisant l'horloge locale de l'unité de répartition, et avant de les envoyer, les transforme de nouveau sous forme de signaux physiques.

7. Système informatique selon l'une quelconque ou plusieurs des revendications 1 à 6, **caractérisé en ce que** des unités de répartition (101, 102) sont reliées entre elles par des canaux de communication (201, 202) afin de rendre possible la mise sous tension et la synchronisation de l'horloge d'une unité de répartition, même si aucune information ne parvient par leurs propres connexions.

8. Système informatique selon l'une quelconque ou plusieurs des revendications 1 à 7, **caractérisé en ce que** les unités de répartition (101, 102) sont reliées à au moins un ordinateur de maintenance par des canaux de communication dédiés (141, 142) afin d'effectuer le paramétrage des unités de répartition et de surveiller le fonctionnement correct des unités de répartition pendant l'opération.
